Europäisches Patentamt

European Patent Office

Office européen des brevets

(11) Publication number: **0 080 299**
**B1**

(12) **EUROPEAN PATENT SPECIFICATION**

(45) Date of publication of patent specification: **04.03.87**

(51) Int. Cl.⁴: **H 02 K 9/10, H 02 K 9/26**

(21) Application number: **82305987.8**

(22) Date of filing: **10.11.82**

(54) Gas pressure equalizing apparatus for two vessels.

(30) Priority: **16.11.81 JP 171031/81**

(43) Date of publication of application:
**01.06.83 Bulletin 83/22**

(45) Publication of the grant of the patent:
**04.03.87 Bulletin 87/10**

(84) Designated Contracting States:
**DE FR GB**

(56) References cited:
**BE-A- 656 728**
**GB-A- 276 654**
**US-A-2 153 386**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Tomiyama, Tadao**
**867-7, Hiraoka-cho Futamata**
**Kakogawa Hyogo Prefecture (JP)**

(74) Representative: **Lawson, David Glynne et al**
**MARKS & CLERK 57-60 Lincoln's Inn Fields**
**London WC2A 3LS (GB)**

Courier Press, Leamington Spa, England.

## Description

The present invention relates to apparatus for equalizing gas pressure or density and more particularly to a gas pressure or density equalization apparatus for two rotary electric machines in order to ensure that the pressure or densities of the cooling gases enclosed in the hermetically sealed vessels of the respective electric machines can be equalized.

As described for example in the text book "Alternating Current Machines" by M. G. Say (Pitman, 4th Edition pages 123—126), in a turbogenerator it is common practice to cool it by hydrogen gas, the hydrogen gas itself being cooled by a respective gas cooler and dried by a separate gas drier. To equalise the pressure or densities of the hydrogen contained in two hermetic vessels within which respective rotary electric machines are mounted for rotation, and which are each provided with respective gas driers for the cooling gases, it is known to interconnect the vessels, but it has been found that imbalances of pressure and density still occur.

It is an object of the present invention to provide a pressure or density equalizing apparatus which can overcome this defect and which allows the pressure or densities to be equalized between two vessels using a relatively simple arrangement.

In accordance with the present invention there is provided apparatus for equalizing the pressure or density of hydrogen gas coolant in first and second vessels of rotary electric machines, each of which is provided with a respective independent gas cooler and each of which is connected to a respective drier separate from the gas cooler for drying the gas coolant, characterised in that the vessels and the driers are interconnected in series by hydrogen gas ducts to form a single closed series hydrogen gas coolant circuit separate from the gas coolers, and in this series circuit the driers alternate with the vessels of the machines so that the hydrogen gas coolant can circulate between the vessels through the driers.

The invention allows reliable equalization of pressure and density of the hydrogen coolant between separate hermetically enclosed hydrogen-cooled machines, by the surprising simple expedient of interconnecting the gas driers conventionally connected to the individual machines, so that the coolant hydrogen can flow through both machine vessels by way of the gas driers conventionally provided.

Additionally, a connecting pipe may be provided for direct communication between the respective machine vessels.

In accordance with one preferred feature of the present invention, each vessel contains a respective blower connected to a rotary shaft of a respective rotary electric machine, such that the cooling gases enclosed within the vessels are forcibly circulated between the vessels through the driers upon rotation of the blowers.

U.S. Patent 2153386 describes a cooling or ventilating system for twin electric motors. British Patent 276654 describes a cooling system for multiple electric machines. In both of these documents, the entire volume of the coolant circulates in series through all the electric machines and intervening coolers. Such an arrangement is not analogous to that of the present invention which makes use of the inherently low capacity hydrogen gas driers to provide equalisation of pressure in composition. Furthermore a cooling arrangement analogous to these prior documents would be totally impractical in a hydrogen-cooled machine in view of the large power and therefore large coolant volume inherent in such machines.

Other objects of the present invention and the invention itself will be more readily apparent from the following detailed description and the appended drawings, in which drawings:

Figure 1 is a schematic view of a conventional gas pressure and density equalizing system; and

Figure 2 is a schematic view of one embodiment of the pressure and density equalizing system in accordance with the present invention.

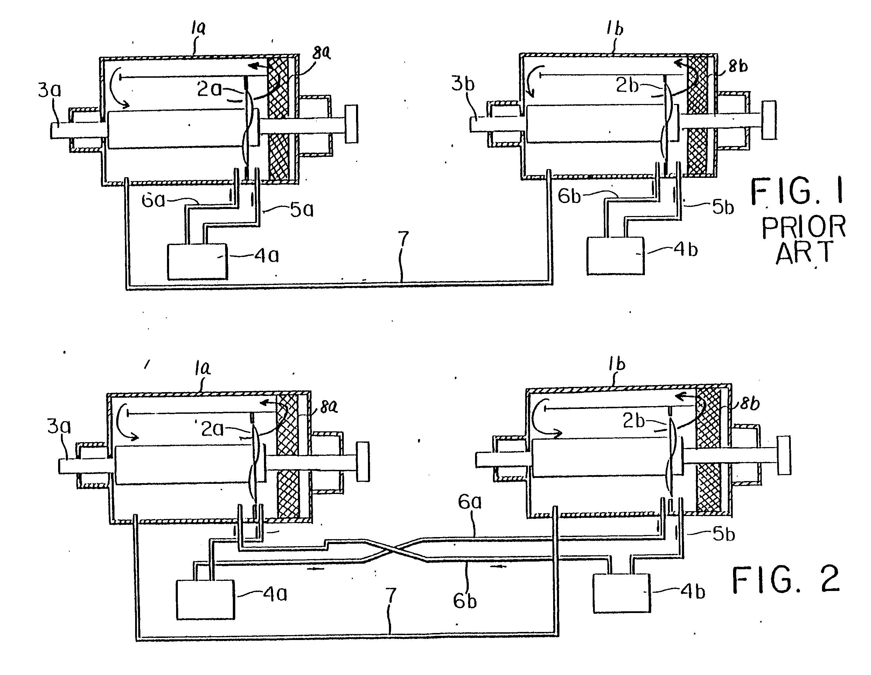

Figure 1 of the attached drawings schematically shows a conventional pressure and density equalizing apparatus as used for cooling two turbo-generators using hydrogen gas as a cooling medium.

Enclosed within first and second generator vessels 1a and 1b is hydrogen gas for cooling first and second turbine generators (not shown). In conventional manner, coolers 8a, 8b for cooling the hydrogen gas are provided in the frames of the generators. A first and a second blower 2a and 2b connected to rotary shafts 3a and 3b of the first and second turbine generators, respectively, are disposed within the vessels 1a and 1b, respectively. First and second gas driers 4a and 4b outside the generators, to dry a fraction of the hydrogen gas coolant enclosed within vessels 1a and 1b, respectively, are connected to the vessels 1a and 1b through first and second high pressure pipes 5a and 5b and low pressure pipes 6a and 6b respectively. A communicating tube 7 connects vessels 1a and 1b for equalizing the pressures of the cooling hydrogen gas coolant within the two vessels 1a and 1b.

The operation of the apparatus described above and shown in Fig. 1 is as follows:

Upon rotation of shafts 3a and 3b, blowers 2a and 2b rotate. Owing to the gas flow caused by rotating blowers 2a and 2b the cooling hydrogen gases enclosed within the vessels 1a and 1b flow into the gas driers 4a and 4b, respectively, through the respective high pressure pipes 5a and 5b, and after drying the gases return to vessels 1a and 1b, respectively, through their respective low pressure pipes 6a and 6b. The densities of the cooling hydrogen gases within the vessels 1a and 1b are equalized by communication tube 7.

However, in the conventional apparatus explained above, since the air volumes penetrating from the outside into vessels 1a and 1b differ between the two vessels 1a and 1b there arises a very slight difference in the densities of the hydrogen gas coolant between the vessels 1a and 1b. Owing to this difference in the densities there arises a difference in the wind pressures induced by the rotation of the blowers 2a and 2b, so that there occurs also a difference in the drying of the hydrogen gas coolant within the driers 4a and 4b. This difference increases acceleratively as the cooling hydrogen gas circulates so that the pressure within vessels 1a and 1b do not become equal in spite of the provision of communication tube 7. Further, in that one of the turbo-generators in which the cooling hydrogen gas density is higher than the other generator, the cooling effect is decreased, and the mechanical loss is also increased. Therefore, as the density of the cooling hydrogen gas increases within one of the generators this generator must have the hydrogen gas therein replaced.

Thus it will be apparent that the conventional pressure and density equalizing apparatus has various defects.

In Fig. 2 of the attached drawings, wherein is shown one embodiment of the present invention, elements identical or similar to those shown in Fig. 1 bear the same reference numerals as in Fig. 1.

As shown in Fig. 2 a first low pressure pipe 6a is connected between a first gas drier 4a and a second vessel 1b, and a second low pressure pipe 6b is connected between a second gas drier 4b and a first vessel 1a. As in the system shown in Fig. 1, the driers 4a and 4b are in communication with vessels 1a and 1b, respectively, through respective high pressure pipes 5a and 5b.

The operation of the embodiment of the present invention described above and shown in Fig. 2 will be explained below.

Upon rotation of the blowers 2a and 2b, the hydrogen gas coolant within the first vessel 1a flows into the gas drier 4a through high pressure pipe 5a, and after drying it flows into the second vessel 1b through the low pressure pipe 6a, while the cooling hydrogen gas within the second vessel 1b flows into the second gas drier 4b through the second high pressure pipe 5b and after drying it flows into the first vessel 1a through the second low pressure pipe 6b. Therefore, it is possible to equalize the pressures and densities of the cooling hydrogen gases within the two vessels 1a and 1b.

Although in the embodiment shown in Fig. 2 the connections of the low pressure pipes 6a and 6b differ from those in the conventional apparatus as shown in Fig. 1 while the connections of the high pressure pipes are the same, in an alternative system the connections of the high pressure pipes 5a and 5b are interchanged relative to Fig. 1 while the low pressure pipes remain as shown in Fig. 1.

In either case, the effect is that the two vessels and the two driers are interconnected in series by low pressure and high pressure gas ducts alternately, forming a single closed circuit in which the driers alternate with the vessels. Because the coolant gas passes through both vessels in the course of being dried the gas pressures and densities in the vessels are reliably equalized.

From the foregoing it will be appreciated that, according to the present invention, by a mere change in the arrangement of pipes of the first and second driers, the gas coolant enclosed within the first and second vessels can be circulated between them and at the same time effectively dried, while the pressure and densities of the gas coolant within the vessels are equalized.

Although the preferred embodiment of the present invention has been described and illustrated, it will be understood by those skilled in the art that modifications may be made in the structure, form and relative arrangement of parts without departing from the scope of the present invention.

**Claims**

1. Apparatus for equalizing the pressure or density of hydrogen gas coolant in first and second vessels (1a, 1b) of rotary electric machines, each of which is provided with a respective independent gas cooler and each of which is connected to a respective drier (4a, 4b) separate from the gas cooler for drying the gas coolant, characterised in that the vessels (1a, 1b) and the driers (4a, 4b) are interconnected in series by hydrogen gas ducts (5a, 5b; 6a, 6b) to form a single closed series hydrogen gas coolant circuit separate from the circuits of the gas coolers, and in this series circuit the driers (4a, 4b) alternate with the vessels (1a, b) of the machines so that the hydrogen gas coolant can circulate between the vessels through the driers.

2. Apparatus as claimed in claim 1 characterised in that said vessels (1a, 1b) are additionally in communication with each other through a connecting pipe (7).

3. Apparatus as claimed in claim 1 or 2 characterised in that each vessel (1a, 1b) contains a respective blower (2a, 2b) mounted on a rotor shaft of a respective electric rotary machine, such that upon rotation of said blowers, said cooling hydrogen gas contained within said vessels is circulated therebetween through said driers (4a, 4b).

**Patentansprüche**

1. Vorrichtung zum Ausgleichen des Drucks oder der Dichte von Wasserstoff-Kühlgas in ersten und zweiten Behältern (1a, 1b) von drehenden elektrischen Maschinen, von denen jede mit einem unabhängigen Gaskühler versehen und mit einem Gastrockner (4a, 4b) getrennt vom Gaskühler zum Trocknen des Kühlgases versehen ist, dadurch gekennzeichnet, daß die Behälter (1a, 1b) und die Trockner (4a, 4b) untereinander über Wasserstoff-Gasleitungen (5a, 5b; 6a, 6b) unter Bildung eines einzigen geschlossenen Serien-Wasserstoff-Kühlgaskreises verbunden sind, der getrennt von den Kreisen der Gaskühler ist, und daß in diesem Serienkreis die Trockner (4a, 4b) so mit den Behältern (1a, 1b) der Maschinen abwechseln, daß das Wasserstoff-Kühlgas zwischen den Behältern durch die Trockner zirkulieren kann.

2. Vorrichtung nach Anspruch 1, dadurch gekennzeichnet, daß die Behälter (1a, 1b) darüber hinaus miteinander über eine andere Verbindungsleitung (7) kommunizieren.

3. Vorrichtung nach Anspruch 1 oder 2, dadurch gekennzeichnet, daß jeder Behälter (1a, 1b) ein Gebläse (2a, 2b) enthält, das an einer Rotorwelle einer jeden drehenden elektrischen Maschine montiert ist, so daß bei Drehung der Gebläse das Wasserstoff-Kühlgas in den Behältern durch die Trockner (4a, 4b) umgewälzt wird.

**Revendications**

1. Appareil d'égalisation de la pression ou de la densité d'hydrogène gazeux comme agent de refroidissement dans des premier et second récipients (1a, 1b) de machines électriques rotatives dont chacun est pourvu d'un refroidisseur respectif, indépendant de gaz et dont chacun est relié à un sécheur respectif (4a, 4b) séparé du refroidisseur de gaz pour sécher l'agent de refroidissement gazeux, caractérisé en ce que les récipients (1a, 1b) et les sécheurs (4a, 4b) sont interconnectés en série par des gaines d'hydrogène gazeux (5a, 5b, 6a, 6b) pour former un seul circuit fermé en série de l'hydrogène gazeux comme agent de refroidissement, séparé du circuit des refroidisseurs de gaz, et dans ce circuit en série, les sécheurs (4a, 4b) alternent avec les récipients (1a, 1b) des machines, donc l'hydrogène gazeux comme agent de refroidissement peut circuler entre les récipients à travers les sécheurs.

2. Appareil selon la revendication 1, caractérisé en ce que lesdits récipients (1a, 1b) sont de plus en communication l'un avec l'autre par un tube de connexion (7).

3. Appareil selon la revendication 1 ou 2, caractérisé en ce que chaque récipient (1a, 1b) contient un ventilateur respectif (2a, 2b) monté sur un arbre de rotor d'une machine électrique rotative respective, de manière que lors de la rotation desdits ventilateurs, ledit hydrogène gazeux de refroidissement contenu dans lesdits récipients soit mis en circulation entre eux par lesdits sécheurs (4a, 4b).

FIG. 1
PRIOR ART

FIG. 2